# EUROPÄISCHE PATENTSCHRIFT

(11) **EP 2 177 322 B1**
(45) Veröffentlichungstag und Bekanntmachung des Hinweises auf die Patenterteilung: **07.05.2014**
(21) Anmeldenummer: 08105613.7
(22) Anmeldetag: 20.10.2008
(51) Int. Cl.: B25F 1/00

(54) **Werkzeugeinheit für ein Elektrowerkzeug, Elektrowerkzeug, sowie Verfahren zum Betreiben eines Elektrowerkzeugs**
Tool unit for an electrical tool, electrical tool and method for operating same
Unité d'outil pour un outil électrique, outil électrique et procédé de fonctionnement d'un outil électrique

(43) Veröffentlichungstag der Anmeldung: 21.04.2010
(73) Patentinhaber: CEKA Elektrowerkzeuge AG + Co. KG, 9630 Wattwil (CH)
(72) Erfinder: Scacchi, Tino, 8340 Hinwil (CH); Foscan, Claudio, 8540 Rapperswil (CH)
(74) Vertreter: Hepp Wenger Ryffel AG

(56) Entgegenhaltungen:
- EP-A- 1 605 392
- DE-A1-102006 007 616
- DE-A1-102006 020 446
- US-A1- 2005 033 544

## Beschreibung

Die vorliegende Erfindung betrifft eine Werkzeugeinheit für ein Elektrowerkzeug, ein Elektrowerkzeug, sowie ein Verfahren zum Betreiben eines Elektrowerkzeugs gemäss dem Oberbegriff der unabhängigen Patentansprüche.

Aus dem Stand der Technik sind Elektrowerkzeuge bekannt, welche ein Zubehör identifizieren und dem entsprechend Betriebsparameter aus einem internen Speicher auslesen oder direkt mit dem Zubehör kommunizieren und Betriebsparameter vom Zubehör übernehmen.

W02006104929A2 offenbart ein Elektrowerkzeug, welches mittels eines Lesesystems das angeschlossene Zubehör, beispielsweise Bohrer, Schraubendreher, Sägeblätter oder Schleifscheiben, identifiziert und anhand einer im Elektrowerkzeug gespeicherten Tabelle die entsprechenden Betriebsparameter einstellt.

In W003054825A2 wird ein Elektrowerkzeug offenbart, welches einen angeschlossenen Werkzeugaufsatz erkennt und identifiziert. Anhand der Identifizierung wird der Werkzeugaufsatz mit den entsprechenden Betriebsparameter betrieben.

W02006066259A2 beschreibt ein Zubehör, insbesondere ein Kreissägeblatt, ein Bohrer, ein Sägeblatt für eine Pendelsäge, ein Schlagbohrer, eine Schleifscheibe oder eine Lochsäge, für ein Elektrowerkzeug, welches eine Kommunikationseinheit beinhaltet. Die Kommunikationseinheit kann mit dem Elektrowerkzeug und einem Inventarisierungssystem Daten austauschen.

US 2005/033544 A1 offenbart ein Gerät, bestehend aus einem Hauptgerät und einem Ergänzungsteil, welches beispielsweise ein Bearbeitungswerkzeug oder ein Schraubendreher-bit sein kann, wobei das Hauptgerät den Typ des Ergänzungsteils selbständig erkennt. Die Betriebsparameter werden entsprechend dem Ergänzungsteil eingestellt. Diese Betriebsparameter sind jedoch im Hauptgerät hinterlegt, sodass nur bekannte Ergänzungsteile mit dem Hauptgerät betrieben werden können.

EP 1 605 392 A1 offenbart einen RFID-Leser, welcher zur Datenerfassung verwendet werden kann.

DE 10 2006 007 616 A1 offenbart ein Sägeblatt, welches mit Sensoren bestückt ist. Mit Hilfe eines RFID-Transponders werden die von den Sensoren ermittelten Daten während des Sägevorgangs an eine externe Empfangseinrichtung übermittelt. Diese Empfangseinrichtung kann ein Bestandteil oder auch ein separates Teil zur Sägevorrichtung sein. Abhängig von den gemessenen und übermittelten Daten, wie beispielsweise Sägeblatttemperatur und Sägeblattverformung, kann auf den Zustand des Sägeblattes geschlossen werden.

Die gezeigten Lösungen aus dem Stand der Technik bedingen allesamt, dass das Zubehör identifiziert werden kann und die Betriebsparameter des Zubehörs aus einem internen Speicher des Elektrowerkzeugs abgerufen werden können. Das System setzt also voraus, dass jedes Zubehör schon im Voraus bekannt ist und mit seinen entsprechenden Daten im Elektrowerkzeug hinterlegt ist.

Es ist Aufgabe der Erfindung, die Nachteile des Standes der Technik zu überwinden. Insbesondere soll ein flexibles System von Elektrowerkzeug und Zubehör zur Verfügung gestellt werden, so dass dem Elektrowerkzeug ein neues, vorher unbekanntes Zubehör angeschlossen und dieses mit seinen optimalen Betriebsparametern betrieben werden kann.

Diese Aufgabe wird durch die in den unabhängigen Patentansprüchen definierten Vorrichtungen gelöst. Weitere Ausführungsformen ergeben sich aus den abhängigen Patentansprüchen.

In der nachfolgenden Beschreibung wird unter einem Werkzeug eine Vorrichtung verstanden, welche eine gewünschte Arbeit direkt verrichten kann. Als Beispiel sei ein Rohrschneider genannt. Demgegenüber bezeichnet eine Werkzeugaufnahme eine Vorrichtung, welche ein Bearbeitungswerkzeug, beispielsweise einen Bohrer, aufnehmen kann. Somit ist ein Bohrfutter eine Werkzeugaufnahme im Sinn dieser Beschreibung.

Gemäß Anspruch 1 ist einer erfindungsgemässen Werkzeugeinheit ein externer Datenspeicher zugeordnet, beispielsweise in Form eines USB-Massenspeichers, welcher zusammen mit der Werkzeugeinheit geliefert wird.

Ausserdem weist die Werkzeugeinheit ein Gehäuse, ein Werkzeug oder eine Werkzeugaufnahme, eine mechanische Schnittstelle zum Befestigen der Werkzeugeinheit an einer Basiseinheit eines Elektrowerkzeugs und ein Umwandlungsmittel auf. Im Datenspeicher sind Daten oder Programme zum Betreiben der Werkzeugeinheit abgelegt.

Nach dem Koppeln der Werkzeugeinheit mit einer Basiseinheit werden die Daten durch Verbinden des USB-Massenspeichers mit der Basiseinheit übertragen. Andere Speicherformen sind ebenfalls denkbar.

Eine erfindungsgemässe Werkzeugeinheit gemäß Anspruch 2 für ein Elektrowerkzeug umfasst ein Gehäuse, ein Werkzeug oder eine Werkzeugaufnahme, eine mechanische Schnittstelle zum Befestigen an einer Basiseinheit eines Elektrowerkzeugs und ein mechanisches Umwandlungsmittel. Des Weiteren weist die Werkzeugeinheit ein Kommunikationsmittel zur Übertragung von Daten an ein Kommunikationsmittel einer Basiseinheit eines Elektrowerkzeugs und einen Datenspeicher mit den zur Übertragung vorgesehenen Daten oder Programmen auf.

Unter Daten werden in der vorliegenden Beschreibung Daten im Allgemeinen, insbesondere Codes, Betriebsparameter, Programmdaten, Computerprogramme, Programmabläufe, Identifikationsdaten, usw. verstanden. Erfindungsgemäss umfassen die Daten oder Programme mindestens ein Element ausgewählt aus der Liste: maximales Drehmoment, optimale Drehzahl, maximal zulässige Klemmkraft, Programmdaten, Computerprogramme, Programmabläufe.

Es können auch alternative oder zusätzliche Daten im Datenspeicher enthalten sein.

Im Datenspeicher sind Programmdaten zur Ablaufsteuerung von Betriebsabläufen und evtl. weitere Daten enthalten. Ein solches Programm zur Ablaufsteuerung kann beispielsweise die Befehlsfolge "5 Drehungen vorwärts, 2 Drehungen zurück" beinhalten. Diese Befehlsfolge kann dann vom Elektrowerkzeug durch Auslösen eines Bedienhebels oder Schalters unabhängig von weiteren Benutzereingriffen abgearbeitet werden.

Die mechanische Schnittstelle dient nicht nur zum Befestigen der Werkzeugeinheit an der Basiseinheit eines Elektrowerkzeugs, sondern auch zur Aufnahme eines Antriebs der Basiseinheit, so dass das Werkzeug oder die Werkzeugaufnahme bewegt werden kann.

Das Umwandlungsmittel dient dem mechanischen Umwandeln einer Bewegung, insbesondere einer Drehbewegung eines Antriebs der Basiseinheit in eine für die Werkzeugeinheit typische Bewegung. Als Umwandlungsmittel kommen beispielsweise Getriebe zum Einsatz.

Der Datenspeicher kann verschiedentlich ausgebildet sein, insbesondere als physischer Speicher, beispielsweise Kombination von Erhöhungen und Aussparungen auf einer Ebene, als optischer Speicher, beispielsweise Strichcode, als elektronischer Speicher, beispielsweise ROM, PROM, EPROM, EEPROM, RAM oder Flash-Speicher.

Durch diese Übertragung von Daten wird ermöglicht, dass neue, zum Zeitpunkt des Erstellens des Elektrowerkzeugs noch unbekannte Anwendungen ermöglicht werden. Beispielsweise kann eine neue Werkzeugeinheit, welche neue Betriebsparameter erfordert an eine bestehende Basiseinheit angeschlossen werden. Die Basiseinheit kann aufgrund der übermittelten Daten in bis anhin unbekannter Weise betrieben werden.

Die Kommunikationsmittel können einen Sender und einen Empfänger zur Datenübertragung mittels Funk- oder RF-Technologie, insbesondere RFID, Zigbee, Bluetooth, NFC, Wi-Fi, Wibree oder Z-Wave, beinhalten. Andere Übertragungsarten sind jedoch auch denkbar, beispielsweise durch mechanische Abtastung von strukturierten Ebenen, mittels elektrischem Kontakt oder optisch. Eine Übertragung von Daten kann auch via Ultra- oder Infraschall erfolgen.

Die Kommunikationsmittel können für eine bidirektionale und/oder unidirektionale Übertragung der Daten ausgerichtet sein. Somit wird eine Datenübertragung nicht nur von der Werkzeugeinheit zur Basiseinheit, sondern auch umgekehrt ermöglicht.

Die Kommunikationsmittel können so ausgebildet sein, dass sie neben der Datenübertragung auch eine Energieübertragung von der Basiseinheit an die Werkzeugeinheit ermöglichen. Vorzugsweise handelt es sich dabei um eine drahtlose Energieübertragung, beispielsweise um eine induktive Kopplung oder einen Wireless Resonant Energy Link (WREL). Somit kann in der Werkzeugeinheit auch ein Aktuator betrieben werden, welcher beispielsweise bei einer Störung die Werkzeugeinheit verriegelt. Die Energieübertragung kann auch separat, also losgelöst von den Kommunikationsmitteln erfolgen.

>

>

Die Werkzeugeinheit kann ausserdem wenigstens einen Sensor zum Messen von Betriebswerten enthalten und diese Betriebswerte mittels der Kommunikationsmittel an die Basiseinheit übertragen. Beispielsweise kann somit ein bevorstehendes Überhitzen eines Getriebes in der Werkzeugeinheit oder eines Bohrers in der Werkzeugaufnahme erkannt und durch eine geeignete Reaktion des Elektrowerkzeugs verhindert werden. Dabei kann eine solche Reaktion voll-automatisch ausgeführt werden oder den Eingriff des Benutzers durch Ausgabe einer entsprechende Warnung erfordern.

Weiter können Mittel zum Erfassen von Störungen vorgesehen sein, welche im Betrieb in der Werkzeugeinheit auftreten können. Das Auftreten solcher Störungen kann mittels der Kommunikationsmittel an die Basiseinheit übertragen werden. Beispiele solcher Störungen sind ein verklemmtes Getriebe der Werkzeugeinheit und eine mangelhafte Befestigung der Werkzeugeinheit an der Basiseinheit. Die Erkennung anderer Störungen ist auch denkbar.

Die Werkzeugeinheit kann ein Werkzeug oder eine Werkzeugaufnahme aus der nachfolgenden nicht abschliessenden Liste enthalten:
- Rohrschneider,
- Presswerkzeug für Pressfittings,
- Blechschere,
- Rohrbieger,
- Polierantrieb,
- Schnellläufergetriebe,
- Langsamläufergetriebe,
- Rohrgewindeschneider,
- Blindnietzange,
- Säbelsäge,
- Stichsäge,
- Kreissäge,
- Nutfräser,
- Tangentialschlagbohrwerk,
- Radialschlagbohrwerk,
- Trockenbauschrauber
- Tacker
- Rödelzange
- Winkelschleifer,
- Schwingschleifer,
- Winkelpolierer,
- Hobel,
- Rohrbandschleifer,
- Innengewindeschneider,
- oszillierender Werkzeugaufsatz,
- Axial-Pressaufsatz.

Die Daten oder Programmparameter sind in im Datenspeicher der Werkzeugeinheit abgelegt. Diese Daten sind auf die Umwandlungsmittel und/oder das Werkzeug der Werkzeugeinheit abgestimmt. Vorzugsweise werden Daten für den optimalen Betrieb der Werkzeugeinheit im Datenspeicher abgelegt, beispielsweise benötigtes Drehmoment, maximal zulässige Drehzahl am Eingang des Umwandlungsmittels oder ganze Schrittabfolgen für den Betrieb eines komplexen Werkzeugs.

Nicht erfindungsgemäß können für jede Werkzeugeinheit die Daten wie Betriebsparameter und/oder Programmparameter auch in der Basiseinheit des Elektrowerkzeugs abgelegt sein. Somit muss der Datenspeicher der Werkzeugeinheit nur Daten zur Identifikation enthalten. Der Kontroller liest dann entsprechend der Identifikation der Werkzeugeinheit die Betriebsparameter und/oder Programmparameter aus einem internen Speicher der Basiseinheit. Damit sind nur verschiedene vorbekannte Anwendungen möglich, welche in der Basiseinheit fest programmiert sind.

Ein erfindungsgemässes Elektrowerkzeug umfasst eine Basiseinheit und eine Werkzeugeinheit, insbesondere nach einer der vorgängig genannten Ausführungsformen, wobei die Basiseinheit und die Werkzeugeinheit eine mechanische Schnittstelle zum Befestigen der Werkzeugeinheit an der Basiseinheit und Kommunikationsmittel aufweisen. Über diese Kommunikationsmittel werden Daten von der Werkzeugeinheit an einen Kontroller der Basiseinheit übertragen. Der Kontroller verfügt über einen internen Speicher, welcher eine Zwischenspeicherung der von der Werkzeugeinheit ausgelesenen Daten erlaubt.

Dabei kann es sich beim Elektrowerkzeug sowohl um ein netzgebundenes als auch netzunabhängiges, beispielsweise akkubetriebenes, Elektrowerkzeug handeln.

Basierend auf den von der Werkzeugeinheit übertragenen Daten können charakteristische Grössen, insbesondere das Drehmoment, die Drehzahl und/oder die Stromaufnahme, eines Antriebs und/oder eines Motors der Basiseinheit gesteuert werden. So enthält beispielsweise eine Werkzeugeinheit in Form eines Schnellläufergetriebes unterschiedliche Betriebsparameter als ein Schraubaufsatz mit einstellbarem Drehmoment.

Die Daten können Programmdaten zur Ablaufsteuerung von Betriebsabläufen enthalten, so dass basierend auf diesen von der Werkzeugeinheit zum Kontroller der Basiseinheit übertragenen Programmdaten und mittels eines Schalters an der Basiseinheit ein komplexer Betriebsablauf des Elektrowerkzeugs ausgeführt werden. Solche Programmdaten zur Ablaufsteuerung können beispielsweise die Befehlsfolge "5 Drehungen vorwärts, 2 Drehungen zurück" beinhalten. Diese Befehlsfolge kann dann vom Elektrowerkzeug durch Auslösen eines Bedienhebels oder Schalters unabhängig von weiteren Benutzereingriffen abgearbeitet werden.

Die Werkzeugeinheit kann einen Sensor zum Aufnehmen von Betriebswerten und/oder Mittel zum Erfassen von Störungen aufweisen, so dass basierend auf diesen von der Werkzeugeinheit übertragenen Störungen oder Betriebswerten des Sensors die charakteristischen Grössen und/oder der Betriebsablauf des Elektrowerkzeugs beeinflussbar sind.

Bei einem erfindungsgemässen Verfahren zum Betreiben eines mit einer Basiseinheit und einer Werkzeugeinheit nach einer der vorhergehenden Ausführungsformen werden zuerst die Daten von einem Datenspeicher der Werkzeugeinheit eingelesen. In einem weiteren Schritt wird dann ein Motor der Basiseinheit entsprechend den eingelesenen Daten gesteuert. Vor der eigentlichen Übertragung der Daten kann eine Identifikation der angeschlossenen Werkzeugeinheit erfolgen.

Es ist denkbar, dass eine Werkzeugeinheit ohne Kommunikationsmittel an die Basiseinheit angeschlossen werden kann. Eine solche Werkzeugeinheit kann dann nicht identifiziert werden und es werden keine Betriebsdaten und/oder Programmdaten von der Werkzeugeinheit an die Basiseinheit übertragen. Die Identifikation erfolgt durch die fehlende Datenübertragung. Eine solche Werkzeugeinheit wird dann 1:1 durch eine entsprechende Benutzerinteraktion am Schalter der Basiseinheit betrieben. Somit wird ermöglicht, sehr kostengünstige Werkzeugeinheiten beispielsweise für den Heimgebrauch herzustellen. Ein normales Bohrfutter ist ein Beispiel für eine solche Werkzeugeinheit, andere Werkzeugeinheiten sind ebenfalls denkbar.

Anhand vom Figuren, welche lediglich Ausführungsbeispiele darstellen, wird die Erfindung im Folgenden näher erläutert. Es zeigen:
- **Figur 1:**: eine Werkzeugeinheit mit einem Werkzeug in Form eines Presswerkzeugs;
- **Figur 2:**: eine Werkzeugeinheit mit einer Werkzeugaufnahme in Form eines Bohrfutters; und
- **Figur 3:**: ein Elektrowerkzeug mit einer Werkzeugeinheit gemäss Figur 1.

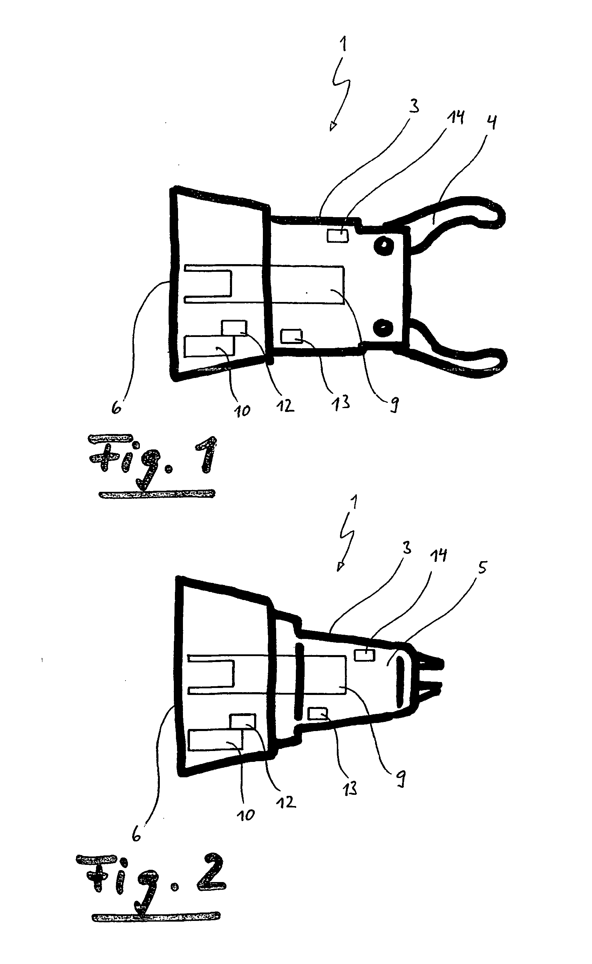

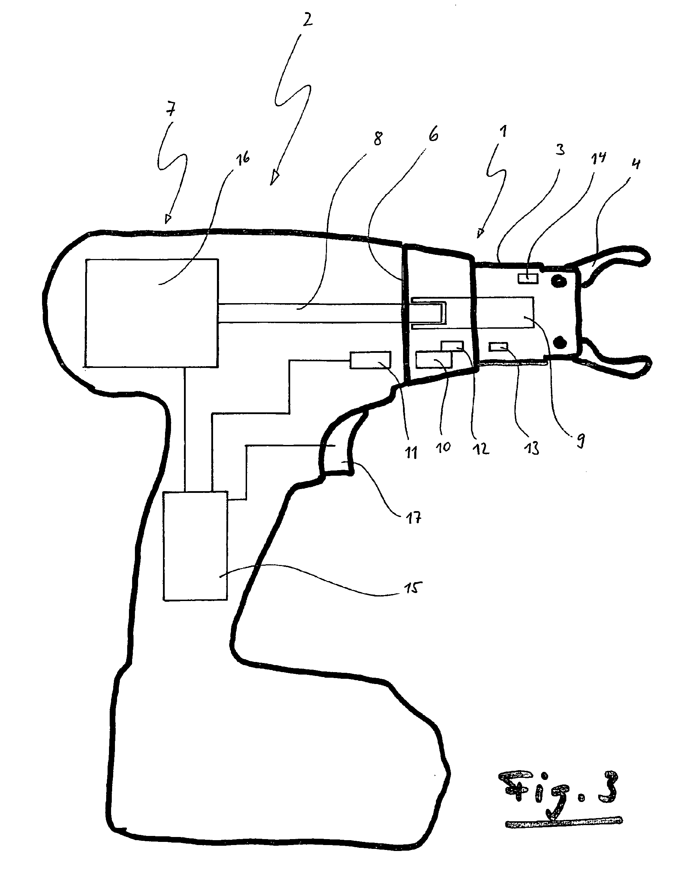

Die Werkzeugeinheit 1 gemäss **Figur 1** verfügt über ein Gehäuse 3, eine mechanische Schnittstelle 6 zum Verbinden der Werkzeugeinheit 1 mit einer entsprechend ausgerüsteten Basiseinheit 7 (siehe Figur 3), und auf der der mechanischen Schnittstelle 6 abgewandten Seite ein Werkzeug 4 in Form eines Presswerkzeugs für die Verpressung von Rohrfittings. Die mechanische Schnittstelle 6 verbindet die Werkzeugeinheit 1 in bekannter Weise mit einer Basiseineinheit 7 und nimmt gleichzeitig, ebenfalls in bekannter Weise, eine angetriebene Welle 8 (siehe Figur 3) der Basiseinheit 7 auf. Die Werkzeugeinheit 1 verfügt weiter über ein Umwandlungsmittel 9, welches die Bewegung, insbesondere die Drehbewegung, der angetriebenen Welle 8 der Basiseinheit 7 in eine für die Werkzeugeinheit 1 typische Bewegung umwandelt. In der gezeigten Ausführungsform muss eine Drehbewegung der durch einen Motor in der Basiseinheit 7 angetriebenen Welle 8 in eine Klemmbewegung der Werkzeugbacken des Werkzeugs 4 gewandelt werden. Dies geschieht typischerweise durch eine Kugelumlaufsspindel. Dem Fachmann sind verschiedene weitere Möglichkeiten bekannt, beispielsweise mittels eines entsprechenden Getriebes oder einer Kombination aus Spindeltrieb und Hebel, so dass hierzu keine weiteren Details benötigt werden.

Des Weiteren verfügt die Werkzeugeinheit 1 im Innern des Gehäuses 3 über ein Kommunikationsmittel 10, welches eine Übertragung von Daten zu einem entsprechenden Kommunikationsmittel 11 der Basiseinheit 7 (siehe Figur 3) ermöglicht. Zur Anwendung gelangen typischerweise RFID oder Bluetooth mit den entsprechenden Transpondern und Lesegeräten. Andere Kommunikationsmittel sind ebenfalls denkbar. Dieses Kommunikationsmittel 10 kann für eine unidirektionale Kommunikation ausgelegt sein, so dass nur Daten von der Werkzeugeinheit 1 zur Basiseinheit übertragen werden können. Alternativ ist auch ein Kommunikationsmittel 10 für eine bidirektionale Kommunikation denkbar, welches auch eine Datenübertragung von der Basiseinheit zur Werkzeugeinheit ermöglicht.

Die gezeigte Werkzeugeinheit 1 verfügt ausserdem über einen nicht flüchtige Datenspeicher 12, wie beispielsweise ein EEPROM, welcher neben den Daten zur Identifikation der Werkzeugeinheit 1 auch die optimalen Betriebsdaten und Programmdaten der Werkzeugeinheit 1 enthält. Solche Daten sind beispielsweise die optimale Drehgeschwindigkeit der angetriebenen Welle, ein maximales Drehmoment und Daten zu einer Bewegungsabfolge. Die Programmdaten sind als Assemblercode oder Firmware gespeichert. Der Datenspeicher 12 ist mit dem Kommunikationsmittel 10 verbunden, so dass das Kommunikationsmittel 10 auf seine Daten zugreifen und übertragen kann. Durch die Übertragung dieser Betriebsdaten an einen Kontroller der Basiseinheit kann die angetriebene Welle der Basiseinheit so angesteuert werden, dass die Werkzeugeinheit 1 ohne Beeinflussung durch den Benutzer im optimalen Operationsbereich betrieben wird. Durch Drücken eines Schalters an der Basiseinheit kann der Benutzer den Bewegungsablauf der Werkzeugeinheit 1 starten. Beispielsweise gibt der Kontroller der Basiseinheit dem Motor zuerst ein Steuersignal für 20 Umdrehungen vorwärts. Diese 20 Umdrehungen der angetriebenen Achse der Basiseinheit werden vom Umformungsmittel 9 der Werkzeugeinheit 1 aufgenommen und via Kugelumlaufspindel in eine Schliessbewegung der Klemmbacken des Werkzeugs 4 umgewandelt. Anschliessend wird diese Position für 2 Sekunden gehalten, bevor der Kontroller dem Motor ein Steuersignal für 20 Umdrehungen rückwärts gibt und somit die Klemmbacken wieder in ihre Ursprungsposition zurückkehren und der Bewegungsablauf abgeschlossen ist.

Die Werkzeugeinheit 1 ist weiter mit einem Sensor 13, beispielsweise einem Temperatursensor, welcher die Temperatur des Getriebes überwacht, ausgestattet. Dieser Sensor 13 ist ebenfalls mit dem Kommunikationsmittel 10 verbunden, so dass der vom Sensor 13 ermittelte Wert kontinuierlich oder bei Überschreiten eines bestimmten Grenzwertes an den Kontroller der Basiseinheit übertragen werden kann. Neben einem Temperatursensor sind auch andere Sensoren 13 denkbar, im vorliegenden Fall des Presswerkzeugs handelte es sich um einen Schliesskontakt, welcher sicherstellt, dass die Klemmbacken des Werkzeugs 4 die Pressbewegung vollständig abschliessen und so die Qualität der Verpressung gewährleistet ist. Der Kontroller kann basierend auf diesen Daten nötigenfalls den Bewegungsablauf unterbrechen und/oder modifizieren.

Ein Sensor 14 zum Erfassen von Störungen, beispielsweise ein Drucksensor oder ein induktiver, kontaktloser Sensor befindet sich ebenfalls im Gehäuse 3 der Werkzeugeinheit 1. Dieser Sensor 14 erfasst Störungen der Werkzeugeinheit 1, welche im Betrieb auftreten können. Solche Störungen beinhalten beispielsweise ein Blockieren der Spindel in ihrem Lager, ein Überhitzen oder eine Überbelastung.

Bei einem Elektrowerkzeug 2 mit der gezeigten Werkzeugeinheit 1 in Form eines Presswerkzeugs dient ein Schalter 17 (siehe Figur 3) dem Auslösen eines Betriebsablaufs. Dieser Betriebsablauf ist in Form von Programmdaten im Datenspeicher 12 in der Werkzeugeinheit 1 hinterlegt. Die Programmdaten beinhalten beispielsweise die Befehlsfolge "20 Drehungen vorwärts, 20 Drehungen rückwärts", was einem Schliessen und Öffnen der Klemmbacken des Presswerkzeugs entspricht. Ausserdem kann der Datenspeicher 12 auch Betriebsdaten, wie "maximal zulässige Klemmkraft" und "Drehzahl der angetriebenen Welle" enthalten. Weiter Daten sind ebenfalls denkbar. Der Kontroller 15 verarbeitet diese Daten und gibt entsprechende Steuersignale an den Motor 16 weiter, sobald der Schalter 17 betätigt wird (siehe Figur 3). Der Programmablauf erfolgt nach dem Auslösen ohne weiteren Benutzereingriff.

Der Kontroller 15 verfügt über einen internen Speicher, welcher eine Zwischenspeicherung der von der Werkzeugeinheit 1 ausgelesenen Daten erlaubt.

In **Figur 2** wird eine Werkzeugeinheit 1 mit einer Werkzeugaufnahme 5 in Form eines Bohrfutters gezeigt. Der Aufbau ist im Wesentlichen identisch zu der Werkzeugeinheit der Figur 1. So verfügt die Werkzeugeinheit 1 auch über ein Gehäuse 3, eine mechanische Schnittstelle 6 zum Verbinden der Werkzeugeinheit 1 mit einer entsprechend ausgerüsteten Basiseinheit 7. Auf der der mechanischen Schnittstelle 6 abgewandten Seite ist aber eine Werkzeugaufnahme 5 in Form eines Bohrfutters gezeigt. Das Umwandlungsmittel 9 ist ein festes Getriebe mit gleichmässiger Übersetzung, welches die Drehzahl der angetriebenen Welle übersetzt. Diese Übersetzung oder Umwandlung kann als eine Erhöhung der Drehzahl, beispielsweise für einen Schnellläufer oder eine Verringerung der Drehzahl für einen Langsamläufer ausgebildet sein.

Bei einem Bohrfutter dient ein Schalter 17 (Siehe Figur 3) beispielsweise der Drehzahlregelung des Motors innerhalb der vom Datenspeicher 12 über die Kommunikationsmittel 10, 11 an den Kontroller 15 übertragenen Betriebsparameter. So kann beispielsweise eine maximale Drehzahl oder ein maximales Drehmoment nicht überschritten werden.

Die genannten Elemente wie Kommunikationsmittel 10, Datenspeicher 12, Sensor 13 und Mittel 14 zum erfassen von Störungen sind entsprechend der Figur 1 ebenfalls im Gehäuse 3 untergebracht. Eine weitere Erklärung zu deren Funktionen erübrigt sich.

Denkbar ist auch ein Bohrfutter, welches komplett mitdreht und sich nur auf einer Welle 8 der Basiseinheit 7 abstützt. Die Drehbewegung eines solchen Bohrfutters wird 1:1 von der angetriebenen Welle 8 der Basiseinheit 7 an einen eingespannten Bohrer übertragen. Ein solches Bohrfutter muss nur erkannt werden, was beispielsweise dadurch ermöglicht wird, in dem kein Kommunikationsmittel und/oder Datenspeicher vorhanden ist. Somit können keine Daten an die Basiseinheit 7 übermittelt werden, so dass die Basiseinheit dieses Bohrfutter als nicht-identifizierbar erkennt. Die Steuerung der Drehzahl erfolgt dann lediglich durch entsprechendes Drücken des Schalters 17 der Basiseinheit.

**Figur 3** zeigt ein Elektrowerkzeug 2 mit einer Werkzeugeinheit 1 gemäss Figur 1, wobei die Werkzeugeinheit 1 mit einer Basiseinheit 7 verbunden ist. Deutlich zu erkennen ist das Zusammenspiel der angetriebenen Welle 8 mit dem Umwandlungsmittel 9. Die Basiseinheit 7 verfügt über einen Motor 16, welcher direkt oder über ein Getriebe mit der angetriebenen Welle 8 verbunden ist. Beim Motor 16 handelt es sich um einen bürstenlosen Gleichstrommotor, andere Motoren sind jedoch ebenfalls verwendbar. Ein Kommunikationsmittel 11 der Basiseinheit 7, welches mit einem Kontroller 15 zur Steuerung des Motors 16 verbunden ist, kommuniziert mit dem Kommunikationsmittel 10 der Werkzeugeinheit 1 und empfängt somit Daten aus dem Datenspeicher 12. Diese Daten, welche die Betriebsdaten der Werkzeugeinheit 1 beinhalten, werden im Kontroller 15 verarbeitet. Der Kontroller 15 verfügt über einen internen Speicher, welcher eine Zwischenspeicherung der von der Werkzeugeinheit 1 ausgelesenen Daten erlaubt. Der Schalter 17 dient dem Benutzer zum Auslösen einer, der Werkzeugeinheit 1 entsprechenden Funktion und ist ebenfalls mit dem Kontroller 15 verbunden. Dabei kann entsprechend der Position des Schalters 16 oder des auf den Schalter 16 ausgeübten Druckes ein Signal an den Kontroller 15 weitergeleitet werden. Der Kontroller 15 kombiniert dieses Signal mit den Daten, welche vom Datenspeicher 12 der Werkzeugeinheit 1 geliefert werden, und löst eine entsprechende Bewegung des Motors 16 aus.

## Patentansprüche

1. Kombination einer Werkzeugeinheit (1) und einem externen Datenspeicher für ein Elektrowerkzeug (2), umfassend ein Gehäuse (3), ein Werkzeug (4) oder eine Werkzeugaufnahme (5), eine mechanische Schnittstelle (6) zum Befestigen der Werkzeugeinheit (1) an einer Basiseinheit (7) eines Elektrowerkzeugs (2) und zur Aufnahme eines Antriebs (8) der Basiseinheit (7), ein Umwandlungsmittel (9) zum mechanischen Umwandeln einer Drehbewegung des Antriebs (8) der Basiseinheit (7) in eine für die Werkzeugeinheit (1) typische Bewegung, **dadurch gekennzeichnet, dass** im externen Datenspeicher Daten oder Programme zum Betreiben der Werkzeugeinheit (1) abgelegt sind, wobei die Daten oder Programme mindestens ein Element aus der nachfolgenden Liste umfassen:
- maximales Drehmoment,
- optimale Drehzahl,
- maximal zulässige Klemmkraft,
- Programmdaten,
- Computerprogramme,
- Programmabläufe.

2. Werkzeugeinheit (1) für ein Elektrowerkzeug. (2), umfassend ein Gehäuse (3), ein Werkzeug (4) oder eine Werkzeugaufnahme (5), eine mechanische Schnittstelle (6) zum Befestigen der Werkzeugeinheit (1) an einer Basiseinheit (7) eines Elektrowerkzeugs (2) und zur Aufnahme eines Antriebs (8) der Basiseinheit (7), und ein Umwandlungsmittel (9) zum mechanischen Umwandeln einer Drehbewegung des Antriebs (8) der Basiseinheit (7) in eine für die Werkzeugeinheit (1) typische Bewegung, **dadurch gekennzeichnet, dass** die Werkzeugeinheit (1) ein Kommunikationsmittel (10) zur Übertragung von in der Werkzeugeinheit (1) enthaltenen Daten an ein Kommunikationsmittel (11) der Basiseinheit (7) und einen Datenspeicher (12) mit den zur Übertragung vorgesehenen Daten oder Programmen aufweist, wobei die Daten oder Programme mindestens ein Element aus der nachfolgenden Liste umfassen:
- maximales Drehmoment,
- optimale Drehzahl,
- maximal zulässige Klemmkraft,
- Programmdaten,
- Computerprogramme,
- Programmabläufe.

3. Werkzeugeinheit (1) gemäss Anspruch 2, **dadurch gekennzeichnet, dass** die Kommunikationsmittel (10, 11) einen Sender und einen Empfänger zur Datenübertragung, insbesondere mittels RF-Technologie, wie RFID, Zigbee, Bluetooth, NFC, Wi-Fi, Wibree oder Z-Wave, beinhalten.

4. Werkzeugeinheit (1) gemäss einem der Ansprüche 2 oder 3, **dadurch gekennzeichnet, dass** die Kommunikationsmittel (10, 11) für eine bidirektionale Übertragung der Daten ausgerichtet sind.

5. Werkzeugeinheit (1) gemäss Anspruch 4, **dadurch gekennzeichnet, dass** die Kommunikationsmittel (10, 11) so ausgebildet sind, dass eine Energieübertragung ermöglicht wird.

6. Werkzeugeinheit (1) gemäss einem der Ansprüche 1 bis 5, **dadurch gekennzeichnet, dass** im Datenspeicher (12) Angaben zur Identifikation der Werkzeugeinheit (1) enthalten sind.

7. Werkzeugeinheit (1) gemäss einem der Ansprüche 2 bis 6, **dadurch gekennzeichnet, dass** die Werkzeugeinheit (1) wenigstens einen Sensor (13) zum Messen von Betriebswerten enthält und diese Betriebswerte des Sensors (13) mittels der Kommunikationsmittel (10, 11) an die Basiseinheit (7) übertragbar sind.

8. Werkzeugeinheit (1) gemäss einem der Ansprüche 2 bis 7, **dadurch gekennzeichnet, dass** Mittel (14) zum Erfassen von Störungen vorgesehen sind, welche im Betrieb in der Werkzeugeinheit (1) auftreten, und das Auftreten solcher Störungen mittels der Kommunikationsmittel (10, 11) an die Basiseinheit (7) übertragbar ist.

9. Werkzeugeinheit (1) gemäss einem der Ansprüche 1 bis 8, **dadurch gekennzeichnet, dass** die Werkzeugeinheit (1) ein Werkzeug (4) oder eine Werkzeugaufnahme (5) aus der Liste:
- Rohrschneider,
- Presswerkzeug für Pressfittings,
- Blechschere,
- Rohrbieger,
- Polierantrieb,
- Schnellläufergetriebe,
- Langsamläufergetriebe,
- Rohrgewindeschneider,
- Blindnietzange,
- Säbelsäge,
- Stichsäge,
- Kreissäge,
- Nutfräser,
- Tangentialschlagbohrwerk,
- Radialschlagbohrwerk,
- Trockenbauschrauber,
- Tacker,
- Rödelzange
- Winkelschleifer,
- Hobel,
- Winkelpolierer,
- Rohrbandschleifer,
- Innengewindeschneider,
- oszillierender Werkzeugaufsatz,
- Axial-Pressaufsatz
enthält.

10. Elektrowerkzeug (2) umfassend eine Basiseinheit (7) und eine Werkzeugeinheit (1) nach einem der Ansprüche 2 bis 9, wobei die Basiseinheit (7) und die Werkzeugeinheit (1) eine mechanische Schnittstelle (6) zum Befestigen der Werkzeugeinheit (1) an der Basiseinheit (7) und Kommunikationsmittel (10, 11) aufweisen, **dadurch gekennzeichnet, dass** über diese Kommunikationsmittel (10, 11) in der Werkzeugeinheit (1) enthaltene Daten von der Werkzeugeinheit (1) an einen Kontroller (14) der Basiseinheit (7) übertragbar sind und dass basierend auf diesen von der Werkzeugeinheit (1) zum Kontroller (15) übertragenen Daten charakteristische Grössen eines Antriebs (8) und/oder eines Motors (16) der Basiseinheit (7) steuerbar sind und/oder basierend auf diesen Daten mittels eines Schalters (17) an der Basiseinheit (7) ein Betriebsablauf des Elektrowerkzeugs (2) ausführbar ist.

11. Elektrowerkzeug (2) gemäss Anspruch 10, **dadurch gekennzeichnet, dass** die Kommunikationsmittel (10, 11) einen Sender und einen Empfänger zur Datenübertragung, insbesondere mittels RF-Technologie, wie RFID, Zigbee, Bluetooth, NFC, Wi-Fi, Wibree oder Z-Wave, beinhalten.

12. Elektrowerkzeug (2) gemäss einem der Ansprüche 10 oder 11, **dadurch gekennzeichnet, dass** die Kommunikationsmittel (10, 11) für eine bidirektionale Übertragung der Daten ausgerichtet ist.

13. Elektrowerkzeug (2) gemäss einem der Ansprüche 10 oder 12, **dadurch gekennzeichnet, dass** die charakteristischen Grössen das Drehmoment und/oder die Drehzahl und/oder die Stromaufnahme des Antriebs (8) und/oder des Motors (16) der Basiseinheit (7) sind.

14. Elektrowerkzeug (2) gemäss einem der Ansprüche 10 bis 13, **dadurch gekennzeichnet, dass** die Werkzeugeinheit (1) einen Sensor (13) zum Aufnehmen von Betriebswerten und/oder Mittel (14) zum Erfassen von Störungen aufweist und dass basierend auf diesen von der Werkzeugeinheit (1) übertragenen Störungen und/oder Betriebswerten des Sensors (13) die charakteristischen Grössen und/oder der Betriebsablauf des Elektrowerkzeugs (2) beeinflussbar ist.

15. Verfahren zum Betreiben eines Elektrowerkzeugs (2) mit einer Basiseinheit (7) und einer Werkzeugeinheit (1), nach einem der Ansprüche 10 bis 14 umfassend die Schritte:
- Einlesen von Betriebsdaten und/oder Programmdaten von einem Datenspeicher (12) der Werkzeugeinheit (1)
- Steuern eines Motors (16) der Basiseinheit (7) entsprechend den eingelesenen Daten.

## Claims

1. Combination of a tool unit (1) and an external data memory for an electric tool (2), comprising a housing (3), a tool (4) or a tool receptacle (5), a mechanical interface (6) for fastening the tool unit (1) to a base unit (7) of an electric tool (2) and for accommodating a drive (8) of the base unit (7), a conversion means (9) for mechanically converting a rotary movement of the drive (8) of the base unit (7) into a movement typical of the tool unit (1), **characterized in that** data or programs for operating the tool unit (1) are stored in the external data memory, the data or programs comprising at least one element from the following list:
- maximum torque,
- optimum speed,
- maximum permissible clamping force,
- program data,
- computer programs,
- program sequences.

2. Tool unit (1) for an electric tool (2), comprising a housing (3), a tool (4) or a tool receptacle (5), a mechanical interface (6) for fastening the tool unit (1) to a base unit (7) of an electric tool (2) and for accommodating a drive (8) of the base unit (7), and a conversion means (9) for mechanically converting a rotary movement of the drive (8) of the base unit (7) into a movement typical of the tool unit (1), **characterized in that** the tool unit (1) has a communication means (10) for transmitting data contained in the tool unit (1) to a communication means (11) of the base unit (7) and a data memory (12) containing the data or programs provided for the transmission, the data or programs comprising at least one element from the following list:
- maximum torque,
- optimum speed,
- maximum permissible clamping force,
- program data,
- computer programs,
- program sequences.

3. Tool unit (1) according to Claim 2, **characterized in that** the communication means (10, 11) include a transmitter and a receiver for data transmission, in particular by means of RF technology, such as RFID, Zigbee, Bluetooth, NFC, WiFi, Wibree or Z-Wave.

4. Tool unit (1) according to either of Claims 2 and 3, **characterized in that** the communication means (10, 11) are oriented for a bidirectional transmission of the data.

5. Tool unit (1) according to Claim 4, **characterized in that** the communication means (10, 11) are designed in such a way that a transmission of energy is made possible.

6. Tool unit (1) according to one of Claims 1 to 5, **characterized in that** details for identifying the tool unit (1) are contained in the data memory (12).

7. Tool unit (1) according to one of Claims 2 to 6, **characterized in that** the tool unit (1) contains at least one sensor (13) for measuring operating values, and these operating values of the sensor (13) can be transmitted to the base unit (7) by the communication means (10, 11).

8. Tool unit (1) according to one of Claims 2 to 7, **characterized in that** means (14) for detecting faults which occur in the tool unit (1) during operation are provided, and the occurrence of such faults can be transmitted to the base unit (7) by the communication means (10, 11).

9. Tool unit (1) according to one of Claims 1 to 8, **characterized in that** the tool unit (1) contains a tool (4) or a tool receptacle (5) from the list:
- pipe cutter,
- crimping tool for crimped fittings,
- sheet-metal shears,
- pipe bender,
- polishing drive,
- high-speed gearing,
- low-speed gearing,
- pipe thread cutter,
- blind rivet pliers,
- sabre saw,
- jigsaw,
- circular saw,
- grooving cutter,
- tangential percussion drilling mechanism,
- radial percussion drilling mechanism,
- drywall screwdriver,
- tacker,
- side-rail clamp,
- angle grinder,
- plane,
- angle polisher,
- pipe belt sander,
- internal thread cutter,
- oscillating tool attachment,
- axial crimping attachment.

10. Electric tool (2) comprising a base unit (7) and a tool unit (1) according to one of Claims 2 to 9, wherein the base unit (7) and the tool unit (1) have a mechanical interface (6) for fastening the tool unit (1) to the base unit (7) and communication means (10, 11), **characterized in that** data contained in the tool unit (1) can be transmitted from the tool unit (1) to a controller (15) of the base unit (7) via these communication means (10, 11), **in that** characteristic variables of a drive (8) and/or of a motor (16) of the base unit (7) can be controlled on the basis of said data transmitted by the tool unit (1) to the controller (15) and/or, on the basis of said data, an operating sequence of the electric tool (2) can be executed by means of a switch (17) on the base unit (7).

11. Electric tool (2) according to Claim 10, **characterized in that** the communication means (10, 11) include a transmitter and a receiver for data transmission, in particular by means of RF technology, such as RFID, Zigbee, Bluetooth, NFC, WiFi, Wibree or Z-Wave.

12. Electric tool (2) according to either of Claims 10 and 11, **characterized in that** the communication means (10, 11) are oriented for a bidirectional transmission of the data.

13. Electric tool (2) according to either of Claims 10 and 12, **characterized in that** the characteristic variables are the torque and/or the speed and/or the power consumption of the drive (8) and/or of the motor (16) of the base unit (7).

14. Electric tool (2) according to one of Claims 10 to 13, **characterized in that** the tool unit (1) has a sensor (13) for recording operating values and/or means (14) for detecting faults and **in that** the characteristic variables and/or the operating sequence of the electric tool (2) can be influenced on the basis of said faults and/or operating values of the sensor (13) that are transmitted from the tool unit (1).

15. Method of operating an electric tool (2) having a base unit (7) and a tool unit (1), according to one of Claims 10 to 14, comprising the steps:
- reading in operating data and/or program data from a data memory (12) of the tool unit (1),
- controlling a motor (16) of the base unit (7) in accordance with the read-in data.

## Revendications

1. Combinaison d'une unité d'outil (1) et d'une mémoire de données externe pour un outil électrique (2), comprenant un logement (3), un outil (4) ou un porte-outil (5), une interface mécanique (6) pour fixer l'unité d'outil (1) sur une unité de base (7) d'un outil électrique (2) et pour recevoir un entraînement (8) de l'unité de base (7), un moyen de conversion (9) pour la conversion mécanique d'un mouvement de rotation de l'entraînement (8) de l'unité de base (7) en un mouvement typique pour l'unité d'outil (1), **caractérisée en ce que** dans la mémoire de données externe, des données ou programmes pour exploiter l'unité, d'outil (1) sont déposés, dans laquelle les données ou programmes comprennent au moins un élément de la liste suivante :
- couple de rotation maximal,
- vitesse de rotation optimale,
- force de serrage maximale autorisée,
- données de programme,
- programmes informatiques,
- déroulements de programme.

2. Unité d'outil (1) pour un outil électrique (2), comprenant un logement (3), un outil (4) ou un porte-outil (5), une interface mécanique (6) pour fixer l'unité d'outil (1) sur une unité de base (7) d'un outil électrique (2) et pour recevoir un entraînement (8) de l'unité de base (7), et un moyen de conversion (9) pour la conversion mécanique d'un mouvement de rotation de l'entraînement (8) de l'unité de base (7) en un mouvement typique pour l'unité d'outil (1), **caractérisée en ce que** l'unité d'outil (1) présente un moyen de communication (10) pour la transmission des données contenues dans l'unité d'outil (1) à un moyen de communication (11) de l'unité de base (7) et une mémoire de données (12) avec les données ou programmes prévus à des fins de transmission, dans laquelle les données ou programmes comprennent au moins un élément de la liste suivante :
- couple de rotation maximal,
- vitesse de rotation optimale,
- force de serrage maximale autorisée,
- données de programme,
- programmes informatiques,
- déroulements de programme.

3. Unité d'outil (1) selon la revendication 2, **caractérisée en ce que** les moyens de communication (10, 11) contiennent un émetteur et un récepteur à des fins de transmission de données, notamment au moyen d'une technologie RF, comme RFID, Zigbee, Bluetooth, NFC, Wi-Fi, Wibree ou Z-Wave.

4. Unité d'outil (1) selon une des revendications 2 ou 3, **caractérisée en ce que** les moyens de communication (10, 11) sont conçus pour une transmission bidirectionnelle des données.

5. Unité d'outil (1) selon la revendication 4, **caractérisée en ce que** les moyens de communication (10, 11) sont conçus de telle sorte qu'une transmission d'énergie soit possible.

6. Unité d'outil (1) selon une des revendications 1 à 5, **caractérisée en ce que** dans la mémoire de données (12) des indications pour identifier l'unité d'outil (1) sont contenues.

7. Unité d'outil (1) selon une des revendications 2 à 6, **caractérisée en ce que** l'unité d'outil (1) contient au moins un capteur (13) pour mesurer des valeurs d'exploitation et ces valeurs d'exploitation du capteur (13) peuvent être transmises au moyen des moyens de communication (10, 11) à l'unité de base (7).

8. Unité d'outil (1) selon une des revendications 2 à 7, **caractérisée en ce que** des moyens (14) pour détecter des perturbations qui se produisent en fonctionnement dans l'unité d'outil (1) sont prévus, et l'apparition de telles perturbations peut être transmise au moyen des moyens de communication (10, 11) à l'unité de base (7).

9. Unité d'outil (1) selon une des revendications 1 à 8, **caractérisée en ce que** l'unité d'outil (1) contient un outil (4) ou un porte-outil (5) de la liste :
- coupe-tube,
- outil de serrage pour raccords pressfittings,
- cisaille à tôle,
- cintreuse,
- entraînement de polisseuse,
- transmission de turbine haute vitesse,
- transmission de turbine basse vitesse,
- coupe-tube fileté,
- riveteuse,
- scie sabre,
- scie sauteuse,
- scie circulaire,
- fraise à rainurer,
- foreuse à percussion tangentielle,
- foreuse à percussion radiale,
- visseuse pour cloisons sèches,
- agrafeuse,
- pince à fil métallique,
- meuleuse d'angle,
- raboteuse,
- polisseuse d'angle,
- ponceuse à bande tubulaire,
- coupe-filetage intérieur,
- porte-outil oscillant,
- support de pressage axial.

10. Outil électrique (2) comprenant une unité de base (7) et une unité d'outil (1) selon une des revendications 2 à 9, dans lequel l'unité de base (7) et l'unité d'outil (1) présentent une interface mécanique (6) pour fixer l'unité d'outil (1) sur l'unité de base (7) et des moyens de communication (10, 11), **caractérisé en ce que** par l'intermédiaire de ces moyens de communication (10, 11) des données contenues dans l'unité d'outil (1) peuvent être transmises de l'unité d'outil (1) à un contrôleur (14) de l'unité de base (7) et **en ce que** sur la base de ces données transmises de l'unité d'outil (1) vers le contrôleur (15) des grandeurs caractéristiques d'un entraînement (8) et/ou d'un moteur (16) de l'unité de base (7) peuvent être commandées et/ou sur la base de ces données un déroulement opérationnel de l'outil électrique (2) peut être exécuté sur l'unité de base (7) au moyen d'un commutateur (17).

11. Outil électrique (2) selon la revendication 10, **caractérisé en ce que** les moyens de communication (10, 11) contiennent un émetteur et un récepteur à des fins de transmission de données, notamment au moyen d'une technologie RF, comme RFID, Zigbee, Bluetooth, NFC, Wi-Fi, Wibree ou Z-Wave.

12. Outil électrique (2) selon une des revendications 10 ou 11, **caractérisé en ce que** les moyens de communication (10, 11) sont conçus pour une transmission bidirectionnelle des données.

13. Outil électrique (2) selon une des revendications 10 ou 12, **caractérisé en ce que** les grandeurs caractéristiques sont le couple de rotation et/ou la vitesse de rotation et/ou la puissance absorbée de l'entraînement (8) et/ou du moteur (16) de l'unité de base (7).

14. Outil électrique (2) selon une des revendications 10 à 13, **caractérisé en ce que** l'unité d'outil (1) présente un capteur (13) pour recevoir des valeurs d'exploitation et/ou des moyens (14) pour détecter des perturbations et **en ce que** sur la base de ces perturbations transmises par l'unité d'outil (1) et/ou des valeurs d'exploitation du capteur (13) les grandeurs caractéristiques et/ou le déroulement opérationnel de l'outil électrique (2) peuvent être influencés.

15. Procédé d'exploitation d'un outil électrique (2) comportant une unité de base (7) et une unité d'outil (1), selon une des revendications 10 à 14, comprenant les étapes de :
- lecture de données d'exploitation et/ou données de programme dans une mémoire de données (12) de l'unité d'outil (1),
- commande d'un moteur (16) de l'unité de base (7) de manière correspondante aux données lues.
